Europäisches Patentamt

European Patent Office

Office européen des brevets

(11) Veröffentlichungsnummer: **0 088 946**
**B1**

(12) # EUROPÄISCHE PATENTSCHRIFT

(45) Veröffentlichungstag der Patentschrift:
04.02.87

(51) Int. Cl.⁴: **H 02 K 5/16**

(21) Anmeldenummer: 83102040.9

(22) Anmeldetag: 02.03.83

(54) Elektrokleinmotor mit einer Vorrichtung zum Einstellen des Axialspiels.

(30) Priorität: 16.03.82 DE 3209537

(43) Veröffentlichungstag der Anmeldung:
21.09.83 Patentblatt 83/38

(45) Bekanntmachung des Hinweises auf die Patenterteilung:
04.02.87 Patentblatt 87/6

(84) Benannte Vertragsstaaten:
AT BE CH DE FR GB IT LI NL SE

(56) Entgegenhaltungen:
DE-A-2 013 714
DE-B-1 178 934
DE-B-1 463 968
DE-B-1 538 921

(73) Patentinhaber: Siemens Aktiengesellschaft Berlin
und München, Wittelsbacherplatz 2, D-8000
München 2 (DE)

(72) Erfinder: Büttner, Josef L., Euerdorfer Strasse 1,
D-8731 Sulzthal (DE)
Erfinder: Heidenfelder, Anton, Mittl. Heerberg 13,
D-8700 Würzburg (DE)

## Beschreibung

Die Erfindung bezieht sich auf einen Elektrokleinmotor mit einer Vorrichtung zum Einstellen des Axialspiels gemäß Oberbegriff des Patentanspruchs 1 bzw. 2; ein derartiger Elektrokleinmotor ist aus der DE-AS 11 78 934 bekannt.

Bei dem bekannten Motor ist auf der Rotorwelle zwischen einem Lager und einem Rotorpaket auf der Rotorwelle stramm, doch verschieblich eine Distanzhülle aufgepreßt, die mit ihrem konischen Hals in eine zylindrische Ausnehmung des Rotorpaketes einragt. Zwischen der Distanzhülse und dem zugewandten Lager sind zusätzlich je eine Anlaufscheibe und eine Filzscheibe vorgesehen. Bei der Montage des Motors wird die Distanzhülse soweit auf der Rotorwelle verschoben und in die Ausnehmung des Rotorpaketes hineingepreßt, bis das gewünschte Axialspiel erreicht ist.

Aufgabe der vorliegenden Erfindung ist es, die eingangs genannte Vorrichtung zur Einstellung des Axialspiels fertigungs- und montagetechnisch, insbesondere im Sinne einer aufwandsarmen Automatisierbarkeit des Montageablaufs des gesamten Elektrokleinmotors, bei zumindest gleich guter Geräuschdämpfung der betriebsmäßigen Axialschwingungen des Rotors zu vereinfachen.

Die Lösung dieser Aufgabe gelingt bei einem Elektrokleinmotor der eingangs genannten Art durch die Lehre der nebengeordneten Patentanspruche 1 bzw. 2.

Bei der erfindungsgemäßen Vorrichtung zur Einstellung des Axialspiels kann mit einem einzigen Bauteil sowohl der gewünschte Abstand zwischen Rotorpaket und Lager als auch eine gute Geräuschdämpfung der betriebsmäßigen Axialschwingungen des Rotors erreicht werden. Der vollautomatisierte Montageablauf wird wesentlich vereinfacht, da gesonderte Arbeits- und Überwachungsvorrichtungen zur gesonderten und richtigen Zuführung der zusätzlichen Anlaufscheibe und der zusätzlichen Filzscheibe entfallen, wobei gleichzeitig die automatische Aussortierung und Zuführung der Gummihülse bei der Montage des Kleinmotors dadurch wesentlich erleichtert wird, daß die Gummihülse axial richtungsunabhängig auf das jeweilige Wellenende aufgebracht werden kann.

An sich kann die erfindungsgemäße Gummihülse an beiden Enden der Rotorwelle vorgesehen werden. Es ist vielfach aber auch üblich, bei mit einem gezielten Axialspiel versehenen Elektrokleinmotoren auf den Rotor eine, nur in einer Axialrichtung wirkende mechanisch oder elektromagnetische Verschiebekraft einwirken zu lassen, derart daß der Rotor betriebsmäßig nur einseitig gegen eines der beiden Lager anläuft; eine Anwendung der erfindungsgemäßen Vorrichtung zur Einstellung des Axialspiels auf einen derartigen Motor ist dann zweckmäßiger derart ausgebildet, daß auf dem anlaufenden Ende der Motorwelle als Distanzhülse eine sowohl am Rotorpaket als auch an dem einen Lager anliegende Gummihülse angeordnet und auf dem anderen nicht anlaufenden Ende der Rotorwelle als Distanzhülse eine Kunststoffhülse im Abstand des gewünschten Axialspiels zu dem anderen Lager auf der Rotorwelle befestigt ist; in diesem Fall können die an beiden Stirnseiten nicht abgestützte Kunststoffhülse im Sinne eines besonders festen Preßsitzes und die beidseitig abgestützte Gummihülse im Sinne eines besonders hohen Dämpfungsgrades ausgebildet werden.

Die Erfindung sowie weitere vorteilhafte Ausgestaltungen der Erfindung werden im folgenden anhand schematisch dargestellter Ausführungsbeispiele in der Zeichnung näher erläutert. Darin zeigen:

Fig. 1 einen axialen Längsschnitt durch einen Elektrokleinmotor,

Fig. 2 eine einzelne erfindungsgemäß vorgesehene Gummihülse.

Die das Rotorpaket 2 mit der darin eingebrachten Käfigwicklung 3 aufnehmende Rotorwelle 1 ist beidseitig in Kalottenlagern drehbar gelagert. Die Kalotten 7, 8 sind in halbkugelförmigen Ausbauchungen von stirnseitig am Statorblechpaket 4 befestigten Lagerbügeln 9, 10 eingelegt und derart in der einen Axialrichtung gesichert. In der anderen Axialrichtung werden sie durch Klemmbrillen 11, 12 gesichert, die mit ihren radial inneren Enden auf der Wölbung der Kalotten 7, 8 aufliegen und mit ihren radial äußeren Enden hinter Halterungswinkeln 13, 14 geklemmt sind, die an die Lagerbügel 9, 10 angeformt sind.

Zur Einstellung des Axialspiels des Rotors dienen Distanzhülsen (Kunststoffhülse 5; Gummihülse 6), die mit ihren axial inneren Enden zur Sicherung einer axialen kurzen Bauweise bis unter die stirnseitigen Kurzschlußringe der Käfigwicklung 3 ragen.

Auf den hier gezeigten Rotor wirkt eine zur Antriebsseite des Motors wirkende axiale Verschiebekraft Z ein, die sich z.B. aufgrund einer elektromagnetischen Zugkraft zwischen Ständer und Läufer mit geschrägten Nuten oder als Gewichtskraft aufgrund einer entsprechend geneigten Einbaulage des Motors ergeben kann. Zwischen der rechten Kalotte 8 und der Stirnseite des Blechpaketes 2 ist als gleichzeitiges abstandssicherndes und geräuschdämpfendes Anlaufglied eine Gummihülse 6 angeordnet, die betriebsmäßig, d.h. bei wirkender Verschiebekraft Z, mit ihrer rechten Stirnseite an der Kalotte 8 und mit ihrer linken Stirnseite am Rotorblechpaket 2 anliegt. Die rechte Gummihülse 6 vereinigt somit in vorteilhafter Weise sowohl die Funktion eines Abstandsgliedes- als auch die Funktion eines geräuschdämpfenden Anlaufgliedes.

Ausgehend von dieser Lage ist dann mittels der am linken Ende der Rotorwelle 1 vorgesehenen Kunststoffhülse 5 das gewünschte Axialspiel a einstellbar. Dazu kann nach der Montage des gesamten Motors die zunächst näher zum linken Ende der Rotorwelle 1 aufgedrückte Kunststoffhülse 5 durch Gegendrücken, z.B. mittels des axial leicht eindrückbaren Lagerbügels 9, soweit auf der Rotorwelle 1 verschoben werden, bis unter Berücksichtigung der jeweils individuellen Toleranzen ein bestimmtes Axialspiel a gewährleistet ist.

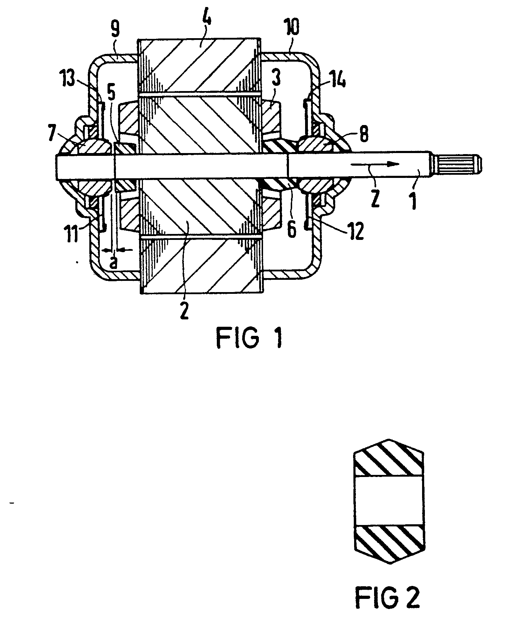

Fig. 2 zeigt eine Ausführung einer erfindungsgemäßen Gummihülse in Form eines Doppelkegelstumpfes; diese Formgebung ergibt durch ihre axial schrägverlaufenden Außenflächen nicht nur eine gute Entformbarkeit bei der Herstellung der Gummihülse, sondern erübrigt in vorteilhafter Weise gleichzeitig eine zusätzliche Überwachung hinsichtlich einer bestimmten richtungsorientierten Zuführung der Gummihülse bei deren Montage auf die Rotorwelle 1.

## Patentansprüche

1. Elektrokleinmotor mit einer Vorrichtung zum Einstellen des Axialspiels des Rotors mittels einer auf der Rotorwelle gehalterten, gegen ein am Stator befestigtes Lager geräuschgedämpft anlaufenden Distanzhülse,

dadurch gekennzeichnet, daß die Distanzhülse im Sinne eines gleichzeitigen abstandsichernden und geräuschdämpfenden Anlaufgliedes als einstückige Gummihülse (6) in Form eines symmetrischen Doppel-Kegelstumpfes mit von der jeweiligen Stirnseite zu den axial mittigen aneinanderliegenden Grundflächen konisch erweiterter Mantelfläche ausgebildet ist.

2. Elektrokleinmotor mit einem durch eine in einer Axialrichtung wirkenden Verschiebekraft betriebsmäßig einseitig nur gegen ein Lager anlaufenden Rotor, mit zwischen den Lagern und dem Rotor angeordneten, geräuschgedämpft anlaufenden Distanzhülsen,

dadurch gekennzeichnet, daß auf dem anlaufenden Ende der Rotorwelle (1) als Distanzhülse und gleichzeitig als geräuschdämpfendes Anlaufglied eine sowohl am Rotorpaket (2) als auch an dem einen Lager (8) anliegende Gummihülse (6) in Form eines symmetrischen Doppel-Kegelstumpfes mit von der jeweiligen Stirnseite zu den axial mittigen aneinanderliegenden Grundflächen konisch erweiterter Mantelfläche angeordnet und auf dem anderen, nicht anlaufenden Ende der Rotorwelle (1) als Distanzhülse eine Kunststoffhülse (5) im Abstand des gewünschten Axialspiels (a) zu dem anderen Lager (7) auf der Rotorwelle befestigt ist (Fig. 1).

## Claims

1. A small electric motor having a device for adjusting the axial clearance of the rotor by means of a distance sleeve which is secured on the rotor shaft and runs up against a bearing secured to the stator, so as to be noiseless, characterised in that the distance sleeve is formed as a simultaneously spacing and silencing running element comprising an integral rubber sleeve (6) in the form of a symmetrical double truncated cone having outer surfaces which conically diverge from the respective end faces to the axially central adjoining base surfaces.

2. A small electric motor having a rotor which in operation runs up against only one bearing by the action of an axial displacing force, and having running distance sleeves which are arranged between the bearings and the rotor and run so as to be noiseless, characterised in that a rubber sleeve (6) which abuts both on the rotor (2) and also on the one bearing (8), is arranged on the butting end of the rotor shaft (1) as a distance sleeve and simultaneously as a silencing running element, in the form of a symmetrical double truncated cone having outer surfaces which conically diverge from the respective end faces to the axially central adjoining base surfaces, and a plastics sleeve (5) is fixed on the other, non-butting end of the rotor shaft (1) as a distance sleeve at the required axial clearance (a) from the other bearing (7) on the rotor shaft (Fig. 1).

## Revendications

1. Petit moteur électrique comportant un dispositif permettant de régler le jeu axial du rotor au moyen d'une douille-entretoise maintenue sur l'arbre du rotor et s'appliquant, d'une manière amortie du point de vue acoustique, contre un palier fixé au stator, caractérisé par le fait que la douille-entretoise est réalisée, au sens d'un organe de butée qui simultanément maintient un écartement et réalise un amortissement acoustique, à la manière d'une douille en caoutchouc (6) d'un seul tenant sous la forme d'un double tronc de cône symétrique comportant une surface enveloppe s'élargissant avec une forme conique depuis la face frontale respective jusqu'aux surfaces de base juxtaposées, situées en position médiane du point de vue axial.

2. Petit moteur électrique comportant un rotor venant s'appliquer unilatéralement, en cours de fonctionnement, uniquement contre un palier sous l'effet d'une force de déplacement agissant suivant une direction axiale, et comportant des douilles-entretoises disposées entre les paliers et le rotor et s'appliquant contre les paliers d'une manière amortie du point de vue acoustique, caractérisé par le fait qu'une douille en caoutchouc (6), s'appliquant aussi bien contre le paquet (2) du rotor que contre l'un des paliers (8) et réalisée sous la forme d'un double tronc de cône symétrique comportant une surface enveloppe s'élargissant avec une forme conique depuis la face frontale respective jusqu'aux surfaces de base juxtaposées, situées axialement en position médiane, est montée sur l'extrémité de butée de l'arbre (1) du rotor en tant que douille-entretoise et simultanément en tant qu'organe d'application réalisant un amortissement acoustique, et qu'une douille en matière plastique (5) est fixée en tant que douille-entretoise sur l'arbre du rotor à une distance, correspondant au jeu axial désiré (a), par rapport à l'autre palier (7), sur l'autre extrémité, qui ne constitue pas une extrémité de butée, de l'arbre (1) du rotor (figure 1).

FIG 1

FIG 2